Europäisches Patentamt

European Patent Office

Office européen des brevets

(11) Publication number: **0 463 175 A1**

# EUROPEAN PATENT APPLICATION
## published in accordance with Art. 158(3) EPC

(21) Application number: **91901896.0**

(22) Date of filing: **11.01.91**

(86) International application number:
**PCT/JP91/00021**

(87) International publication number:
**WO 91/10536 (25.07.91 91/17)**

(51) Int. Cl.5: **B23Q 35/12**

(30) Priority: **16.01.90 JP 6539/90**

(43) Date of publication of application:
**02.01.92 Bulletin 92/01**

(84) Designated Contracting States:
**DE FR GB IT**

(71) Applicant: **FANUC LTD.**
**3580, Shibokusa Aza-Komanba Oshinomura**
**Minamitsuru-gun, Yamanashi 401-05(JP)**

(72) Inventor: **ARAMAKI, Hitoshi, c/o FANUC Dai-3**
**Vira-karamatsu**
**3527-1, Shibokusa, Oshinomura**
**Minamitsuru-gun, Yamanashi 401-05(JP)**
**Inventor: OKAMOTO, Tetsuji, c/o FANUC Dai-3**
**Vira-karamatsu**
**3527-1, Shibokusa, Oshinomura**
**Minamitsuru-gun, Yamanashi 401-05(JP)**

(74) Representative: **Brunner, Michael John et al**
**GILL JENNINGS & EVERY 53-64 Chancery Lane**
**London WC2A 1HN(GB)**

(54) **COPYING-SPEED CONTROL METHOD.**

(57) A copying-speed control method for an NTC copying which performs profile control of one axis and numerical control of the other two axes. In the servo loop of the numerical control axis, an override control circuit (23) is provided between an error counter (22) and a D/A converter (16x). When a displacement changes abruptly the override value of the override control circuit is changed to stop or reduce the servomotor output of an error quantity in the error counter (22). Thereby, the biting at sudden changing parts of a model is reduced.

F I G. 1

## Technical Field

The present invention relates to a tracing speed control method in an NTC tracing for numerically controlling two axes while controlling a tracing of another axis, and more particularly, to a tracing speed control method in which an amount of bite into a model at a region where an amount of displacement abruptly changes is lessened.

## Background Art

When tracing a specific region of a model, an NTC tracing (numerically controlled tracing) in which a tracing path on an X-Y plane is numerically controlled and a tracing is carried out while using a Z-axis as a tracing axis, is known. In this NTC tracing, when an amount of displacement from a stylus is abruptly increased or decreased at an abrupt change region of a model, a bite phenomenon occurs, and the prevention of this bite is a crucial problem to be solved in the NTC tracing.

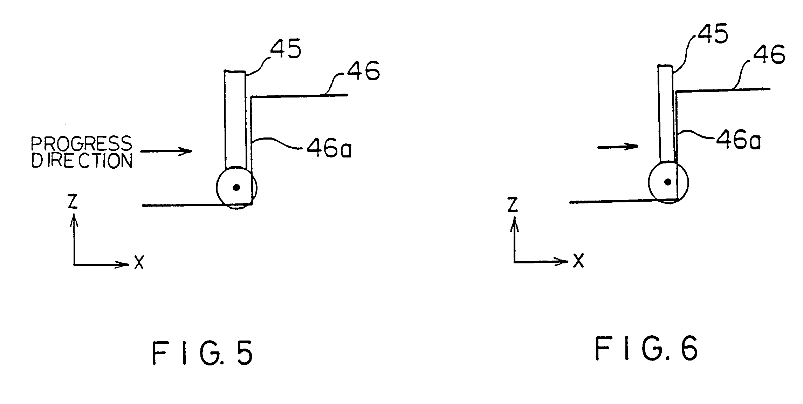

Figure 5 is a diagram showing an abrupt change region of a model. In this Figure, the lateral direction is represented by a X-axis, and the longitudinal direction by a Z-axis. A model 46 is traced by a stylus 45, and when the stylus 45 reaches a rising part 46a of the model 46, the amount of displacement is abruptly increased. Accordingly, a control is carried out by stopping an NC command in the X-axis direction and by moving the stylus upward so that the amount of bite is reduced.

Nevertheless, even if the NC command of the X-axis is made zero, an error amount already in an error counter of the X-axis is output to a servo motor, which inevitably leads to a bite of the stylus 45 into the model 46.

Figure 6 is a diagram showing the stylus biting into the model. To reduce this amount of bite, the tracing speed and so on can be made slower, but this increases the machining time.

## Disclosure of the Invention

The present invention has been made in view of the aforesaid drawbacks, and an object of the present invention is to provide a tracing speed control method in which an amount of bite into a model at a region where an amount of displacement abruptly changes is lessened.

To achieve the above object, in accordance with the present invention there is provided a tracing speed control method in an NTC tracing for numerically controlling two axes while controlling a tracing of another axis, characterized in that an override control circuit is provided in a servo loop of a numerically controlled axis between an error counter and a D/A converter, and when an amount of displacement is abruptly changed, an override value of the above override control circuit is changed to thereby reduce an amount of bite into a model.

An abrupt change region of a model is detected by an abrupt change in an amount of displacement, and when the displacement amount is abruptly changed, an NC command is stopped and the override value of the override control circuit between the error counter and the D/A converter is changed to thereby stop or reduce a servo motor output of an error amount in the error counter, and accordingly, a bite amount of at the abrupt change region of the model is reduced.

## Brief Description of the Drawings

Fig. 1 is a block diagram of an X-axis control of a tracing speed control method according to the present invention;
Fig. 2 is a diagram showing a change in an override value of an override control circuit;
Fig. 3 is a diagram showing a second change in an override value of an override control circuit;
Fig. 4 is a block diagram showing a constitution of a tracing control system of an embodiment according to the present invention;
Fig. 5 is a diagram showing an abrupt change region of a model; and
Fig. 6 is a diagram showing a stylus biting into a model.

## Best Mode of Carrying Out the Invention

An embodiment of the present invention will be hereinafter described with reference to the drawings.

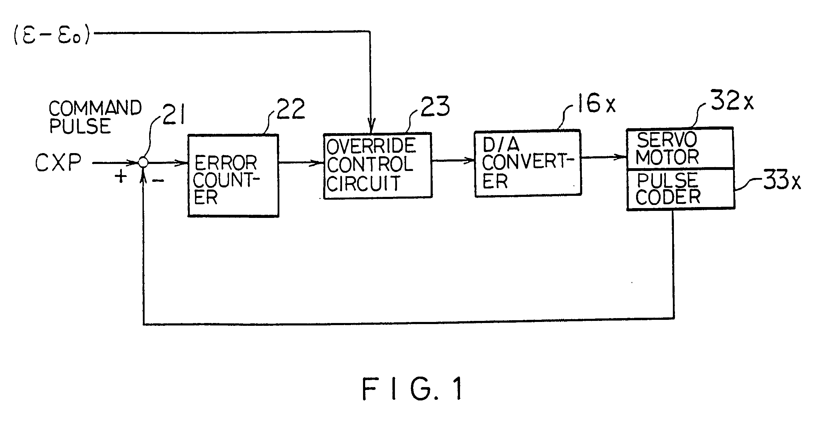

Figure 1 is a block diagram showing an X-axis control of a tracing speed control method of the present invention. In the NTC tracing, the X-axis and the Y-axis are numerically controlled and the Z-axis is used as a tracing axis. Therefore, only the control of the X-axis will be hereinafter described, but this also applies to a control of the Y-axis. A command pulse CXP of the X-axis is supplied to an operator 21, and a difference from a feedback pulse FPx is given to an error counter 22. An override control circuit 23 is connected to the error counter 22, and details of the override control circuit 23 will be described later. An output of the override control circuit 23 is output to a D/A converter 16x an drives a servo motor 32x, and the feedback pulse FPx from a pulse coder 33x coupled with the servo motor 32x is fed back to the operator 21.

Here, when a stylus reaches an abrupt change region of a model, an amount of displacement is abruptly changed, and at this time, an override value of the override control circuit 23 is changed so that an output of an error of the error counter 22 to be output to the servo motor 32x is reduced or stopped. Accordingly, movement in the X-direction and the Y-direction is reduced or stopped, and the stylus is moved only in the Z-axis direction, to thereby reduce an amount of bite.

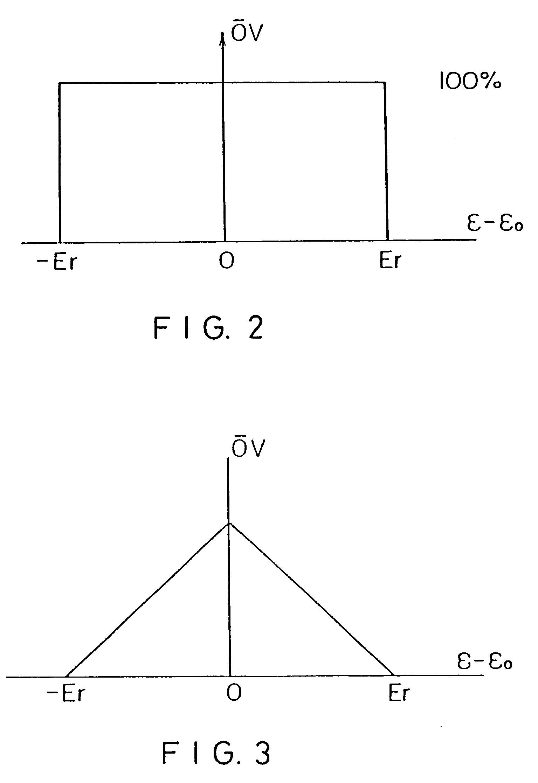

Figure 2 is a diagram showing an change in the override value of the override control circuit. The axis of abscissa shows for a difference $(\epsilon - \epsilon_0)$ between an actual amount of displacement $\epsilon$ and a reference amount of displacement $\epsilon_0$, and the axis of ordinate shows the override value. Namely, when $(\epsilon - \epsilon_0)$ is more than a certain value Er, the override value is made zero, the output of the error counter 22 is stopped, and the servo motor 32x is stopped. When $(\epsilon - \epsilon_0)$ is less than Er, the override value is 100 %.

Figure 3 is a diagram showing another change in the override value of the override control circuit. Namely, when $(\epsilon - \epsilon_0)$ is more than Er, the override value is zero, and when it is less than Er, the override value is changed linearly from 100 % to 0 % corresponding to the value of $(\epsilon - \epsilon_0)$.

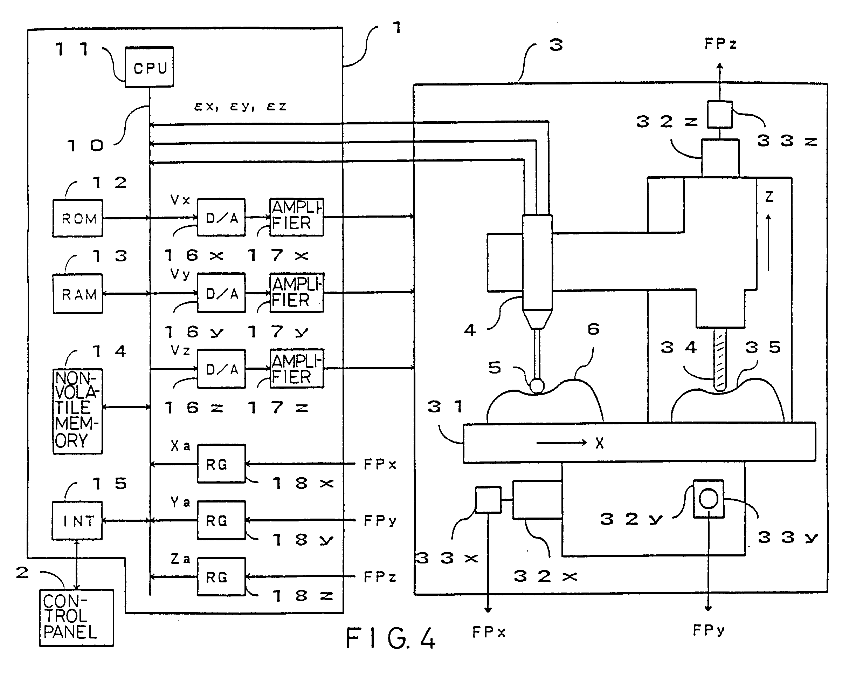

Figure 4 is a block diagram showing a constitution of a tracing control system of an embodiment according to the present invention. In this Figure, a processor 11 reads a system program stored in a ROM 12 through a bus 10, and controls an overall operation of a tracing control system 1 according to this system program, a RAM 13 stores temporary data, and a nonvolatile memory 14 backed up by a battery, not shown, stores various parameters such as a tracing direction, tracing speed and so on input from a control panel 2.

A tracer head 4 provided at a tracing machine 3 detects each of the displacement amounts $\epsilon x$, $\epsilon y$, and $\epsilon z$ in the X-, Y-, and Z-directions generated when a stylus 5 provided at the tip end of the tracer head 4 is brought into contact with a model 6, digitally converts those values, and outputs the values to the processor 11.

The processor 11 numerically controls the X- and Y-axes and controls the Z-axis as a tracing axis. For the tracing, a speed command Vz of the Z-axis is generated based on the displacement amounts $\epsilon x$, $\epsilon y$, and $\epsilon z$ and the commanded tracing direction and tracing speed, through a known process. These speed commands are analog converted at D/A converters 16x, 16y, and 16z, input to servo amplifiers 17x, 17y, and 17z, the outputs of which drive servo motors 32x, 32y, and 32z of the tracing machine 3.

Accordingly, the tracer head 4 is moved in the Z-axis direction so that a constant relative positional relationship is maintained the tracer head 4 and the model 6, and a table 31 is moved in the X-axis direction and the Y-axis direction which is at right angles to the paper surface by a numerical control command, whereby a workpiece 35 is machined to the same shape as that of the model 6 by a cutter 34, the Z-axis of which is controlled in the same way as the tracer head 4.

Also, pulse coders 33x, 33y, and 33z are provided at the servo motors 32x, 32y, and 32z respectively for generating detecting pulses FPx, FPy, and FPz at a predetermined amount of rotation of each thereof. Present position registers 18x, 18y, and 18z in the tracing control system 1 count up/down the detecting pulses FPx, FPy, and FPz according to the respective rotation directions, and acquire present position data Xa, Ya and Za of the tracer head 4, and this position data is read by the processor 11.

The error counter 22, the override control circuit 23, etc. are software, and thus are not shown in Figure 4. 23, etc. are software, and thus are not shown in Figure 4.

Also, although the X- and Y-axes are used for the numerically control axes and the z-axis for the tracing axis in the above description, it is obvious that the numerically control axes and the tracing axis can be optionally chosen.

With the present invention, as described above, as the override control circuit is provided at the output of the numerical control axes, to thereby stop or reduce the speed of the numerically control axes at the abrupt change region of the model, the amount of bite can be reduced, and accordingly, the tracing accuracy can be improved.

## Claims

1. A tracing speed control method in a NTC tracing for numerically controlling two axes while controlling a tracing of another axis, characterized in that:

   an override control circuit is provided in a servo loop of a numerical control axis between an error counter and a D/A converter, and

   an override value of said override control circuit is changed so as to reduce an amount of bite into a model when an amount of displacement is abruptly changed.

2. A tracing speed control method according to claim 1, wherein an override value at said override control circuit is made 0 % when an amount of displacement exceeds a certain value and the override value is made 100 % when the amount is less than the certain value.

3. A tracing speed control method according to claim 1, wherein an override value is made 0 % at said override control circuit when an amount of displacement exceeds a certain value and the override value is changed in a straight line state connecting 0 % and 100 % when the amount of displacement is less than the certain value.

$(\varepsilon - \varepsilon_0)$

COMMAND PULSE

CXP

21

22 ERROR COUNTER

23 OVERRIDE CONTROL CIRCUIT

16x D/A CONVERTER

32x SERVO MOTOR

33x PULSE CODER

FIG. 1

EP 0 463 175 A1

$\bar{O}V$

100%

$\mathcal{E}-\mathcal{E}_0$

$-Er$     O     Er

F I G. 2

$\bar{O}V$

$\mathcal{E}-\mathcal{E}_0$

$-Er$     O     Er

F I G. 3

FIG. 4

EP 0 463 175 A1

45

46

46a

X

Z

F I G. 6

45

46

46a

PROGRESS
DIRECTION

X

Z

F I G. 5

# INTERNATIONAL SEARCH REPORT

International Application No PCT/JP91/00021

**I. CLASSIFICATION OF SUBJECT MATTER** (if several classification symbols apply, indicate all) [6]

According to International Patent Classification (IPC) or to both National Classification and IPC

Int. Cl[5]    B23Q35/12

**II. FIELDS SEARCHED**

| Minimum Documentation Searched [7] | |
|---|---|
| Classification System | Classification Symbols |
| IPC | B23Q33/00, B23Q35/12, G05B19/18 |

Documentation Searched other than Minimum Documentation
to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| X | JP, A, 62-24947 (Fanuc Ltd.), February 2, 1987 (02. 02. 87), Claim & EP, A1, 226643 & US, A, 4851750 & WO, A1, 8700476 | 1-3 |
| P | JP, A, 2-205442 (Fanuc Ltd.), August 15, 1990 (15. 08. 90), Claim | 1-3 |
| A | JP, B2, 60-26663 (Fanuc Ltd.), June 25, 1985 (25. 06. 85), Claim (Family: none) | 1 |
| A | JP, A, 60-71147 (Fanuc Ltd.), April 23, 1985 (23. 04. 85), Claim (Family: none) | 1 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 1, 1991 (01. 04. 91) | April 8, 1991 (08. 04. 91) |

| International Searching Authority | Signature of Authorized Officer |
|---|---|
| Japanese Patent Office | |

Form PCT/ISA/210 (second sheet) (January 1985)